# EUROPEAN PATENT APPLICATION

(11) **EP 2 452 991 A1**
(43) Date of publication of application: **16.05.2012**
(21) Application number: 11188569.5
(22) Date of filing: 10.11.2011
(51) Int. Cl.: C09J 7/02, H01B 17/56

(54) **Insulating tape**

(30) Priority: 10.11.2010 JP 2010251596
(71) Applicant: Nitto Denko Corporation, Ibaraki-shi, Osaka 567-8680 (JP)
(72) Inventor: Murakami, Ai, Ibaraki-shi, Osaka 567-8680 (JP); Watanabe, Hiroyuki, Ibaraki-shi, Osaka 567-8680 (JP); Daigaku, Noritsugu, Ibaraki-shi, Osaka 567-8680 (JP); Nonaka, Takahiro, Ibaraki-shi, Osaka 567-8680 (JP); Tamai, Hironori, Ibaraki-shi, Osaka 567-8680 (JP)
(74) Representative: Grünecker, Kinkeldey, Stockmair & Schwanhäusser

(57) **Abstract**

An object of the present invention is to provide an insulating tape that is superior in less-corrosive property and provides its product containing the insulating tape with favorable reliability even when it is used under severer environment for an extended period of time. The insulating tape according to the present invention includes a plastic film base material and a pressure-sensitive adhesive layer including an acrylic polymer on or above at least one face of the plastic film base material, wherein the pressure-sensitive adhesive layer has a moisture content, as determined after storage in an environment at 60°C and 90% RH for 24 hours, of less than 0.15 wt % and monomer components constituting the acrylic polymer contain substantially no carboxyl group-containing monomer.

## Description

### [Technical Field]

The present invention relates to an insulating tape. More specifically, it relates to an insulating pressure-sensitive adhesive tape for use in electrical insulation application.

### [Background Art]

Insulating tapes have been used as simple and convenient electrically insulation means in various electrical apparatus and electronic devices and others. Recently, along with diversification of products such as electronic devices, properties demanded for the insulating tapes used in these products are also diversified. For example, there is a demand for maintaining reliability of the products, such as electronic devices, in which insulating tapes are used, without deterioration in performance of the products, even when they are used under high-temperature and high-humidity environment or for an extended period of time.

As the insulating tape known is an insulating adhesive tape (insulating tape) having a water absorption adjusted to 0.5 wt % or less which is resistant to foaming during bonding under heat and pressure and shows favorable adhesion reliability (see Patent Document 1). Also known is an electrically insulating laminate tape (insulating tape) in the configuration of a tetrafluoroethylene resin film and an aromatic polycarbonate resin film formed on one face thereof that shows stabilized insulative and mechanical properties even when the temperature and the humidity fluctuate significantly (see Patent Document 2). Also known is a tape-shaped insulation material (insulating tape) having an insulation base material and a pressure-sensitive adhesive layer of a water-dispersible acrylic pressure-sensitive adhesive formed on one or both faces thereof that shows favorable insulating properties even under humidified condition, wherein a water absorption of the water-dispersible acrylic pressure-sensitive adhesive after drying is controlled to 4 wt % or less (see Patent Document 3).

### [Citation List]

### [Patent Literature]

Patent Document 1: Japanese Unexamined Patent Publication No. 9-316409
Patent Document 2: Japanese Unexamined Patent Publication No. 2002-124148
Patent Document 3: Japanese Unexamined Patent Publication No. 2004-165025

### [Summary of Invention]

### [Technical Problem]

However, the insulating tape described in Patent Document 1, which demands a drying treatment for reduction of its water absorption, had a problem of low workability. In addition, the insulating tapes described in Patent Documents 1 to 3, which contain an acidic component in the polymer constituting the adhesive or the pressure-sensitive adhesive, had a problem of facile corrosion of the adherends (especially metallic adherends) and materials surrounding the insulating tape. In particular, in such a case, use of a product containing the insulating tape (in particular, for example in precision devices) in severer environment (e.g., higher-temperature and higher-humidity environment or environment where the temperature and the humidity fluctuate significantly) for an extended period of time caused a problem of deterioration in reliability of the product.

Thus, an object of the present invention is to provide an insulating tape that is superior in less-corrosive property and provides its product containing the insulating tape with favorable reliability even when it is used under severer environment for an extended period of time. The "less-corrosive property," as used in the present description, means a property of causing no corrosion for example on the adherend.

### [Solution to Problem]

After intensive studies, the inventors have found that it is possible to obtain an insulating tape superior in less-corrosive property, by preparing an insulating tape having a plastic film base material and a pressure-sensitive adhesive layer including an acrylic polymer on or above at least one face thereof, wherein monomer components for the acrylic polymer constituting the pressure-sensitive adhesive layer contain no carboxyl group-containing monomer and the moisture content of the pressure-sensitive adhesive layer, as determined after storage in an environment at 60°C and 90% RH for 24 hours, is controlled in a particular range, and made the present invention.

Specifically, the present invention provides an insulating tape including a plastic film base material and a pressure-sensitive adhesive layer including an acrylic polymer on or above at least one face of the plastic film base material, wherein the pressure-sensitive adhesive layer has a moisture content, as determined after storage in an environment at 60°C and 90% RH for 24 hours, of less than 0.15 wt % and monomer components constituting the acrylic polymer contain substantially no carboxyl group-containing monomer.

In addition, in the insulating tape, the acrylic polymer preferably includes, as monomer components, an alkyl (meth)acrylate in an amount of 70 to 99 wt % and a hydroxyl group-containing monomer in an amount of 1 to 10 wt % with respect to the total amount of the monomer components constituting the acrylic polymer (100 wt %).

Further, the insulating tape preferably has a b* value of 0 to 3.0 after storage in an environment at 85°C and 85% RH for 550 hours.

### [Advantageous Effects of Invention]

The insulating tape according to the present invention in the configuration above is hard to corrode such as an adherend and thus superior in less-corrosive property. For the reason above, it does not impair the properties of the products such as electronic devices containing the insulating tape, shows its favorable electrically insulating properties continuously, in particular, even when the product containing the insulating tape is used in severer environment (e.g., higher-temperature and higher-humidity environment or an environment where the temperature and the humidity fluctuate significantly) for an extended period of time, and improves the reliability of the products. Thus, the insulating tape according to the present invention, when used, gives a product superior particularly in long-term reliability. In addition, the insulating tape according to the present invention does not demand an additional special treatment, such as drying for reduction of moisture content, and thus can improve the workability at the time of manufacturing the products containing the insulating tape.

### [Brief Description of Drawings]

Figure 1 is a schematic view (plan view) illustrating a sample for measurement of resistance used in evaluation of less-corrosive property in Examples.
Figure 2 is a schematic cross-sectional view (taken along A-A in Figure 1) illustrating the sample for measurement of resistance used in evaluation of less-corrosive property in Examples.

### [Description of Embodiments]

The insulating tape according to the present invention includes a plastic film base material and a pressure-sensitive adhesive layer formed on or above at least one face thereof, wherein the moisture content of the pressure-sensitive adhesive layer, as determined after storage in an environment at 60°C and 90% RH for 24 hours, is less than 0.15 wt % and monomer components constituting the acrylic polymer contain substantially no carboxyl group-containing monomer (hereinafter, referred to as "pressure-sensitive adhesive layer according to the present invention").

The insulating tape according to the present invention may be, for example, a single-sided pressure-sensitive adhesive tape in the configuration having the pressure-sensitive adhesive layer according to the present invention on or above one surface of a plastic film base material and no adhesive layer on the other surface, or a double-sided pressure-sensitive adhesive tape having a pressure-sensitive adhesive layer on or above both surfaces of the plastic film base material. When the insulating tape according to the present invention is a double-sided pressure-sensitive adhesive tape, at least one of the pressure-sensitive adhesive layers on or above both faces of the plastic film base material is the pressure-sensitive adhesive layer according to the present invention. The insulating tape may have a configuration having the pressure-sensitive adhesive layer according to the present invention on or above both surfaces of the plastic film base material or a configuration having the pressure-sensitive adhesive layer according to the present invention on or above one surface of the plastic film base material and an adhesive layer other than the pressure-sensitive adhesive layer according to the present invention (hereinafter, referred to as "other pressure-sensitive adhesive layer") on or above the other surface. In particular, when the insulating tape according to the present invention is a double-sided pressure-sensitive adhesive tape, a double-sided pressure-sensitive adhesive tape in the configuration having the pressure-sensitive adhesive layer according to the present invention on or above both faces of a plastic film base material is preferable from the viewpoint of high insulating performance.

The "insulating tapes," as used in the present invention, mean sheet-shaped products, thus including "insulation sheets" as well. The surface of the pressure-sensitive adhesive layer may be referred to as a "pressure-sensitive adhesive face". As used throughout the present specification, the singular forms "a," "an," and "the" include plural reference unless the context clearly dictates otherwise.

### [Plastic film base material]

The plastic film base material in the insulating tape according to the present invention is not particularly limited, and examples thereof include plastic films of polyolefin resins, polyester resins (e.g., polyethylene terephthalate (PET) and polyethylene naphthalate (PEN)), polyvinyl chloride resins, polyvinyl acetate resins, polyamide resins, polyimide resins, polyether ether ketone (PEEK), polyphenylene sulfide (PPS) and the like. In particular, plastic films made of a polyester resin are preferable, and a polyethylene terephthalate film (PET film) is more preferable from the viewpoints of transparency, mechanical strength, and electrical insulating properties. The plastic film may be in a single- or multi-layered configuration.

The surface of the plastic film base material may be, as needed, subjected to a common surface treatment, for example oxidation treatment by a chemical or physical method such as corona treatment, chromate treatment, ozone exposure, flame exposure, high-pressure electrical shock exposure or ionizing radiation treatment; or a coating treatment for example with an undercoat agent, in the range that does not impair the advantageous effects of the invention.

The thickness of the plastic film base material is not particularly limited, but preferably 1 to 350 µm, more preferably 2 to 125 µm, more preferably 12 to 50 µm. When the thickness is 1 µm or more, the insulating tape shows electrically insulating properties. Alternatively, when the thickness is 350 µm or less, the insulating tape can be kept easily in the roll shape, leading to improvement in processability.

The b* value of the plastic film base material is not particularly limited, but preferably 0 to 2.0, more preferably 0 to 1.5. When the b* value is 2.0 or less, the insulating tape have less adverse effects on the appearance of the product containing the insulating tape. The b* value above is the b* value in the L*a*b* color system, and can be determined in accordance with JIS Z8729, for example, by using a simplified spectrocolorimeter (trade name: "DOT-3C", manufactured by Murakami Color Research Laboratory Co., Ltd.).

The haze of the plastic film base material is not particularly limited, but preferably 20% or less, more preferably 3% or less. When the haze is 20% or less, the insulating tape has less adverse effects on the appearance of the product containing the insulating tape. The haze can be determined in accordance with JIS K7136, for example, by using a haze meter (trade name: "HM-150", manufactured by Murakami Color Research Laboratory Co., Ltd.).

It is preferable to use a plastic film base material superior in electrically insulating properties to make the insulating tape according to the present invention show favorable electrically insulating properties, although it is not particularly limited thereto. The electrically insulating properties of the plastic film base material can generally be evaluated, for example, by dielectric breakdown voltage and volume resistivity.

The dielectric breakdown voltage of the plastic film base material is not particularly limited, but is preferably 1 kV or more, more preferably 2 kV or more. When the dielectric breakdown voltage is 1 kV or more, the insulating tape shows favorable electrically insulating properties. The dielectric breakdown voltage can be determined in accordance with JIS C2318.

### [Pressure-sensitive adhesive layer according to the present invention]

The pressure-sensitive adhesive layer according to the present invention is a pressure-sensitive adhesive layer (acrylic pressure-sensitive adhesive layer) containing an acrylic polymer formed from an acrylic monomer as the essential monomer component. The content of the acrylic polymer in the pressure-sensitive adhesive layer according to the present invention (100 wt %) is not particularly limited, but preferably 65 wt % or more (for example, 65 to 100 wt %), more preferably 70 to 100 wt %.

The pressure-sensitive adhesive layer according to the present invention is prepared from a pressure-sensitive adhesive composition (an acrylic pressure-sensitive adhesive composition) containing an acrylic polymer as essential component or a pressure-sensitive adhesive composition (an acrylic pressure-sensitive adhesive composition) containing a mixture of monomers constituting an acrylic polymer (referred to as "monomer mixture") or the partial polymer thereof as essential component, although the production method may vary depending on the method of producing the pressure-sensitive adhesive layer and is not limited to that described above. Examples of the former compositions include, but are not particularly limited to, so-called solvent pressure-sensitive adhesive compositions, and examples of the latter compositions include, but are not particularly limited to, so-called active energy ray-curable pressure-sensitive adhesive compositions. The pressure-sensitive adhesive composition for the pressure-sensitive adhesive layer according to the present invention is preferably a solvent pressure-sensitive adhesive composition or an active energy ray-curable pressure-sensitive adhesive composition.

The "pressure-sensitive adhesive composition" also means a "composition for forming pressure-sensitive adhesive layer ". Alternatively, the "monomer mixture" means a mixture only of monomer components constituting the acrylic polymer. The "partial polymer" means a composition in which one or two or more of the components above in the composition constituting the monomer mixture are partially polymerized.

The acrylic polymer is not particularly limited, but is preferably an acrylic polymer containing an alkyl (meth)acrylate having a linear or branched chain alkyl group as its essential monomer component. The "(meth)acrylate" means "acrylate" and/or "methacrylate" (one or both of "acrylate" and "methacrylate"), and similar terms also mean similarly.

Examples of the alkyl (meth)acrylates having a linear or branched chain alkyl group (hereinafter, referred to simply as "alkyl (meth)acrylates") include (meth)acrylic C₁₋₂₀ alkyl esters [alkyl (meth)acrylates in which the alkyl group has 1 to 20 carbon atoms] such as methyl (meth)acrylate, ethyl (meth)acrylate, propyl (meth)acrylate, isopropyl (meth)acrylate, n-butyl (nieth)acrylate, isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate and eicosyl (meth)acrylate. These alkyl (meth)acrylates may be used alone or in combination of two or more. Among them, 2-ethylhexyl acrylate (2EHA) is preferable from the viewpoint of productivity.

The content of the alkyl (meth)acrylate is not particularly limited, but preferably 70 to 99 wt %, more preferably 85 to 98 wt %, with respect to the total amount of the monomer components constituting the acrylic polymer (100 wt %). When the alkyl(meth)aczylate content is 70 wt % or more, the pressure-sensitive adhesive tape shows favorable adhesive properties.

The monomer components constituting the acrylic polymer may contain additionally polar group-containing monomers, polyfunctional monomers, and other monomers (monomers other than alkyl (meth)acrylates, polar group-containing monomers, and the polyfunctional monomers) as copolymerization monomer components. Use of the copolymerization monomer components, for example, leads to improvement of the adhesive power to the adherend or the cohesive power of the pressure-sensitive adhesive layer.

Examples of the polar group-containing monomers include hydroxyl group-containing monomer such as hydroxyalkyl (meth)acrylates (for example, 2-hydroxyethyl (meth)acrylate, 3-hydroxypropyl (meth)acrylate, 4-hydroxybutyl (meth)acrylate and 6-hydroxyhexyl (meth)acrylate), vinyl alcohol, and allyl alcohol; amide group-containing monomers such as (meth)acrylamide, N,N-dimethyl(meth)acrylamide, N-methylol(meth)acrylamide, N-methoxymethyl(meth)acrylamide, N-butoxymethyl(meth)acrylamide and N-hydroxyethylacrylamide; amino group-containing monomer such as aminoethyl (meth)acrylate, dimethylaminoethyl (meth)acrylate and t-butyl aminoethyl (meth)acrylate; glycidyl group-containing monomers such as glycidyl (meth)acrylate and methylglycidyl (meth)acrylate; cyano group-containing monomers such as acrylonitrile and methacrylonitrile; heterocyclic ring-containing vinyl monomers such as N-vinyl-2-pyrrolidone, (meth)acryloylmorpholine, vinylpyridine, N-vinylpiperidone, vinylpyrimidine, N-vinylpiperazine, N-vinylpyrrole, N-vinylimidazole and vinyloxazole; alkoxyalkyl (meth)acrylate monomers such as methoxyethyl (meth)acrylate and ethoxyethyl (meth)acrylate; sulfonic acid group-containing monomer such as sodium vinylsulfonate; phosphoric acid group-containing monomer such as 2-hydroxyethyl acryloyl phosphate; imide group-containing monomers such as cyclohexylmaleimide and isopropylmaleimide; isocyanate group-containing monomers such as 2-methacryloyloxyethyl isocyanate; and vinyl ester monomers such as vinyl acetate and vinyl propionate. The polar group-containing monomers may be used alone or in combination of two or more. In particular, the polar group-containing monomer is preferably a hydroxyl group-containing monomer, more preferably 2-hydroxyethyl acrylate (HEA).

The content of the polar group-containing monomer (in particular, hydroxyl group-containing monomer) is not particularly limited, but preferably 1 to 10 wt %, more preferably 2 to 8 wt %, with respect to the total amount of the monomer components constituting the acrylic polymer (100 wt %). When the content is 1 wt % or more, the adhesive power of the insulating tape can be improved. Alternatively, it is possible by adjusting the content to 10 wt % or less to reduce the moisture content of the pressure-sensitive adhesive layer as described below and improve less-corrosive property, and in particular, it is possible to make a product more reliable, even when the product including the insulating tape is used under severer environment for an extended period of time. It also leads to improvement of tackiness without excessive increase of the cohesive power of the pressure-sensitive adhesive layer.

Examples of the polyfunctional monomers include hexanediol di(meth)acrylate, butanediol di(meth)acrylate, (poly)ethylene glycol di(meth)acrylate, (poly)propylene glycol di(meth)acrylate, neopentylglycol di(meth)acrylate, pentaerythritol di(meth)acrylate, pentaerythritol tri(meth)acrylate, dipentaerythritol hexa(meth)acrylate, trimethylolpropane tri(meth)acrylate, tetramethylolmethane tri(meth)acrylate, allyl (meth)acrylate, vinyl (meth)acrylate, divinylbenzene, epoxy acrylates, polyester acrylates, and urethane acrylates. The polyfunctional monomers may be used alone or in combination of two or more.

The content of the polyfunctional monomer is preferably 0 to 0.5 wt %, more preferably 0 to 0.3 wt %, with respect to the total amount of the monomer components constituting the acrylic polymer (100 wt %). When the content is 0.5 wt % or less, the cohesive power of the pressure-sensitive adhesive layer does not become too high, then the tackiness is improved. The polyfunctional monomer may not be used, if a crosslinking agent is used, but the content of the polyfunctional monomer, when no crosslinking agent is used, is preferably 0.001 to 0.5 wt %, more preferably 0.002 to 0.1 wt %.

Examples of the monomers (other monomers) other than the alkyl (meth)acrylates, polar group-containing monomers and polyfunctional monomers include alicyclic hydrocarbon group-containing (meth)acrylic esters such as cyclopentyl (meth)acrylate, cyclohexyl (meth)acrylate and isobornyl (meth)acrylate; aryl (meth)acrylate esters such as phenyl (meth)acrylate; aromatic vinyl compounds such as styrene and vinyltoluene; olefins or dienes such as ethylene, butadiene, isoprene and isobutylene; vinyl ethers such as vinyl alkylethers; and vinyl chloride.

The monomer components constituting the acrylic polymer in the pressure-sensitive adhesive layer according to the present invention does not contain a carboxyl group-containing monomer substantially. The phrase "not contained substantially," as used in the present description, means that the component is not added intentionally and added only as inevitable contamination. Specifically, the content of the carboxyl group-containing monomer is less than 1 wt %, preferably less than 0.1 wt %, with respect to the total amount of the monomer components constituting the acrylic polymer (100 wt %). When the carboxyl group-containing monomer content is less than 1 wt %, the amount of the carboxyl group-containing monomer as the unreacted monomer (residual monomer) in the acrylic polymer decreases, inhibiting corrosion for example of the adherend, and thus making the insulating tape show favorable less-corrosive property. When the content of the carboxyl group-containing monomer content is large (for example, 1 wt % or more), the corrosive carboxyl group-containing monomer easily exudes out of the pressure-sensitive adhesive layer, leading to corrosion of the adherend and deterioration of the product. Examples of the carboxyl group-containing monomers include (meth) acrylic acid, itaconic acid, maleic acid, fumaric acid, crotonic acid, isocrotonic acid and the like. In addition, anhydrides of the carboxyl group-containing monomers (for example, acid anhydride group-containing monomers such as maleic anhydride and itaconic anhydride) are understood to be included in the carboxyl group-containing monomers.

The acrylic polymer can be prepared by polymerization of the monomer components by a common known polymerization method. Examples of the polymerization methods for the acrylic polymer include solution polymerization method, emulsion polymerization method, bulk polymerization method, active-energy ray irradiation polymerization method (active-energy ray polymerization method) and the like. In particular, among them, solution and active-energy ray polymerization methods are preferable from the viewpoint of easiness of controlling the polymerization reaction and a solution polymerization method is particularly preferable from the point of cost. In polymerization for the acrylic polymer, components suitable for the polymerization method, such as polymerization initiators, chain-transfer agents, emulsifiers, and solvents, may be used, as selected properly from those known or commonly used.

In preparation of the acrylic polymer, polymerization initiators such as thermal polymerization initiators and photopolymerization initiators (photoinitiators) may be used depending on the kind of the polymerization reaction. These polymerization initiators may be used alone or in combination of two or more. Although use of the polymerization initiator is not particularly limited, generally, a thermal polymerization initiator is frequently used as a polymerization initiator in the solution polymerization method, while a photopolymerization initiator is frequently used as a polymerization initiator in the active energy ray polymerization method.

Examples of the thermal polymerization initiators include azo polymerization initiators, peroxide polymerization initiators, and redox polymerization initiators. Examples of the azo initiators include 2,2'-azobisisobutylonitrile (hereinafter, referred to as AIBN), 2,2'-azobis-2-methylbutylonitrile (hereinafter, referred to asAMBN), dimethyl 2,2'-azobis(2-methylpropionate), 4,4'-azobis-4-cyanovaleric acid, azobisisovaleronitrile 2,2'-azobis(2-amidinopropane) dihydrochloride, 2,2'-azobis[2-(5-methyl-2-imidazolin-2-yl)propane] dihydrochloride, 2,2'-azobis(2-methylpropionamidine) disulfate salt, and 2,2'-azobis(N,N'-dimethyleneisobutylamidine) dihydrochloride. Examples of the peroxide polymerization initiators include t-butyl hydroperoxide, di-t-butyl peroxide, 1,1-bis(t-butylperoxy)-3,3,5-trimethylcyclohexane, and 1,1-bis(t-butylperoxy)cyclododecane, dicumyl peroxide.

In particular, the thermal polymerization initiator is preferably an azo polymerization initiator for the viewpoint of prevention of yellowing of the insulating tape. In particular, use of a polymerization initiator based on benzoyl group-containing peroxide, such as benzoyl peroxide or t-butyl peroxybenzoate, as the thermal polymerization initiator is unfavorable, because it leads to facile yellowing of the insulating tape. The amount of the azo polymerization initiator used is not particularly limited, but preferably 0.05 to 0.5 part by weight, more preferably 0.1 to 0.3 part by weight, with respect to the total amount of the monomer components constituting the acrylic polymer (100 parts by weight).

Examples of the photopolymerization initiators include, but are not particularly limited to, benzoin ether photopolymerization initiators, acetophenone photopolymerization initiators, α-ketol photopolymerization initiators, aromatic sulfonyl chloride photopolymerization initiators, optically active oxime photopolymerization initiators, benzoin photopolymerization initiators, benzil photopolymerization initiators, benzophenone photopolymerization initiators, ketal photopolymerization initiators, and thioxanthone photopolymerization initiators. The amount of the photopolymerization initiator used is not particularly limited, but, for example, preferably 0.01 to 0.2 part by weight, more preferably 0.05 to 0.15 part by weight, with respect to the total amount (100 parts by weight) of the monomer components constituting the acrylic polymer.

Examples of the benzoin ether photopolymerization initiators include benzoin methyl ether, benzoin ethyl ether, benzoin propyl ether, benzoin isopropyl ether, benzoin isobutyl ether, 2,2-dimethoxy-1,2-diphenylethan-1-one, and anisole methyl ether. Examples of the acetophenone photopolymerization initiators include 2,2-diethoxyacetophenone, 2,2-dimethoxy-2-phenylacetophenone, 1-hydroxycyclohexylphenylketone, 4-phenoxydichloroacetophenone, and 4-(t-butyl)dichloroacetophenone. Examples of the α-ketol photopolymerization initiators include 2-methyl-2-hydroxypropiophenone and 1-[4-(2-hydroxyethyl)phenyl]-2-methylpropan-1-one. Examples of the aromatic sulfonyl chloride photopolymerization initiators include 2-naphthalenesulfonyl chloride. Examples of the optically active oxime photopolymerization initiators include 1-phenyl-1,1-propandione-2-(o-ethoxycarbonyl)-oxime. Examples of the benzoin photopolymerization initiators include benzoin. Examples of the benzil photopolymerization initiators include benzil. Examples of the benzophenone photopolymerization initiators include benzophenone, benzoylbenzoic acid, 3,3'-dimethyl-4-methoxybenzophenone, polyvinylbenzophenone, and α-hydroxycyclohexylphenylketone. Examples of the ketal photopolymerization initiators include benzyldimethyl ketal. Examples of the thioxanthone photopolymerization initiators include thioxanthone, 2-chlorothioxanthone, 2-methylthioxanthone, 2,4-dimethylthioxanthone, isopropylthioxanthone, 2,4-diisopropylthioxanthone, and dodecylthioxanthone.

Various common solvents can be used in the solution polymerization above. Examples of the solvents are organic solvents such as esters such as ethyl acetate and n-butyl acetate; aromatic hydrocarbons such as toluene and benzene; aliphatic hydrocarbons such as n-hexane and n-heptane; alicyclic hydrocarbons such as cyclohexane and methylcyclohexane; and ketones such as methylethylketone and methylisobutylketone. These solvents may be used alone or in combination of two or more.

Examples of the active energy rays irradiated in the active energy ray polymerization (photopolymerization) include dissociative radiation rays such as α ray, β ray, γ ray, neutron beam and electron beam, and ultraviolet ray, and in particular, ultraviolet ray is favorable. The irradiation energy, the exposure period, the irradiation method or the like of the active energy ray is not particularly limited, if it causes reaction of the monomer components by activating the photopolymerization initiator.

The weight-average molecular weight of the acrylic polymer is not particularly limited, but preferably 300,000 to 1,200,000, more preferably 400,000 to 1,000,000, more preferably 500,000 to 900,000. A weight-average molecular weight of 300,000 or more leads to decrease in the amount of the unreacted monomers (residual monomers) and thus, to decrease in the outgassing amount generated during heating. It also leads to improvement in tackiness. Alternatively, a weight-average molecular weight of 1,200,000 or less leads to improvement in coatability. The weight-average molecular weight can be controlled, for example, by adjustment of the kind and amount of the polymerization initiator, the temperature and the period of polymerization, the monomer concentration, and the rate of monomer dropwise addition.

The acrylic polymer in the pressure-sensitive adhesive layer according to the present invention in a particularly preferable typical configuration is, for example, an acrylic polymer prepared from monomer components containing 2-ethylhexyl acrylate in an amount of 95 to 97 wt % and 2-hydroxyethyl acrylate in an amount of 3 to 5 wt % with respect to the total amount of the monomer components constituting the acrylic polymer (100 wt %). However, it is not limited thereto.

As described above, the pressure-sensitive adhesive layer according to the present invention is prepared with a pressure-sensitive adhesive composition containing an acrylic polymer as the essential component or with a pressure-sensitive adhesive composition containing a monomer mixture constituting the acrylic polymer or the partial polymer thereof as the essential component, although it is not particularly limited thereto. The pressure-sensitive adhesive composition preferably contains a crosslinking agent, for example, for crosslinking of the acrylic polymer and also for increase of the cohesive power of the pressure-sensitive adhesive layer according to the present invention. In other words, the pressure-sensitive adhesive layer according to the present invention is preferably a pressure-sensitive adhesive layer formed with a pressure-sensitive adhesive composition containing a crosslinking agent.

Examples of the crosslinking agents include, but are not particularly limited to, epoxy crosslinking agents, isocyanate crosslinking agents, melamine crosslinking agents, peroxide crosslinking agents, urea crosslinking agents, metal alkoxide crosslinking agents, metal chelate crosslinking agents, metal salt crosslinking agents, carbodiimide crosslinking agents, oxazoline crosslinking agents, aziridine crosslinking agents, amine crosslinking agents and the like. The crosslinking agents may be used alone or in combination of two or more. In particular, the crosslinking agent is preferably an epoxy crosslinking agent or isocyanate crosslinking agent.

The epoxy crosslinking agent for use may be a polyfunctional epoxy compound having multiple epoxy groups in the molecule. Examples thereof include N,N,N',N'-tetraglycidyl-m-xylenediamine, diglycidylaniline, 1,3-bis(N,N-diglycidylaininomethyl)cyclohexane, 1,6-hexanediol diglycidyl ether, neopentylglycol diglycidyl ether, ethylene glycol diglycidyl ether, propylene glycol diglycidyl ether, polyethylene glycol diglycidyl ether, polypropylene glycol diglycidyl ether, sorbitol polyglycidyl ether, glycerol polyglycidyl ether, pentaerythritol polyglycidyl ether, polyglycerol polyglycidyl ether, sorbitan polyglycidyl ether, trimethylolpropane polyglycidyl ether, diglycidyl adipate, diglycidyl o-phthalate, triglycidyl-tris(2-hydroxyethyl)isocyanurate, resorcin diglycidyl ether, bisphenol-S-diglycidyl ether, and epoxy resins having two or more epoxy groups in the molecule. For example, the commercial products such as "Tetrad C" (trade name, manufactured by MITSUBISHI GAS CHEMICAL COMPANY, INC.) can be used.

The isocyanate crosslinking agent for use may be, for example, a polyfunctional isocyanate compound having multiple isocyanate groups in the molecule. Examples thereof include aliphatic isocyanate crosslinking agents (aliphatic isocyanate compounds) such as 1,2-ethylene diisocyanate, 1,4-butylone diisocyanate and 1,6-hexamethylene diisocyanate; alicyclic isocyanate crosslinking agents (alicyclic isocyanate compounds) such as cyclopentylene diisocyanate, cyclohexylene diisocyanate, isophorone diisocyanate, hydrogenated tolylene diisocyanates and hydrogenated xylene diisocyanates; and aromatic isocyanate crosslinking agents (aromatic isocyanate compounds) such as 2,4-tolylene diisocyanate, 2,6-tolylene diisocyanate, 4,4'-diphenylmethane diisocyanate and xylylene diisocyanate. In addition, a trimethylolpropane/tolylene diisocyanate adduct [trade name: "Coronate L", manufactured by NIPPON POLYURETHANE INDUSTRY CO., LTD.] (aromatic isocyanate crosslinking agent), a trimethylolpropane/hexamethylene diisocyanate adduct [trade name: "Coronate HL", manufactured by NIPPON POLYURETHANE INDUSTRY CO., LTD.] (aliphatic isocyanate crosslinking agent) and the like are also used.

The content of the crosslinking agent in the pressure-sensitive adhesive composition is not particularly limited, but preferably more than 0 part by weight and 3 parts by weight or less, with respect to the acrylic polymer (100 parts by weight). It is particularly preferably more than 0 part by weight and 2 parts by weight or less. When the content is more than 0 part by weight, the adhesive power increases. On the other hand, when the content is 3 parts by weight or less, deterioration of the adhesive power is prevented. When two or more crosslinking agents are used, the total amount (total content) of these crosslinking agents is preferably in the range above.

In particular, when an aromatic isocyanate crosslinking agent is used as the crosslinking agent, the content of the aromatic isocyanate crosslinking agent added is not particularly limited, but preferably 2.0 parts by weight or less (for example, 0.2 to 2.0 parts by weight), more preferably 0.2 to 0.8 part by weight, with respect to the acrylic polymer (100 parts by weight). When the content is less than 2.0 parts by weight, yellowing of the insulating tape, when used under severe environment or for an extended period of time, is inhibited and thus, there are less adverse effects on the appearance of the product. It also prevents excessive hardening of the pressure-sensitive adhesive layer and leads to improvement of tackiness. Alternatively, a content of 0.2 part by weight or more, leads to improvement of the anchoring efficiency of the pressure-sensitive adhesive layer to the plastic film base material, thus preventing troubles for example caused by stringiness (phenomenon of part of the pressure-sensitive adhesive layer being withdrawn in the shape of filament at the tape terminal when the insulating tape is rewound) and also by anchoring breakage when it is peeled off from the adherend.

The pressure-sensitive adhesive composition for preparation of the pressure-sensitive adhesive layer according to the present invention preferably does not contain a tackifier resin (tackifier) substantially. Specifically, the content of the tackifier resin in the pressure-sensitive adhesive composition is preferably less than 1 wt %, more preferably less than 0.1 wt %, with respect to the total amount of the monomer components constituting the acrylic polymer (100 wt %). When the content is less than 1 wt %, the outgassing amount generated when the insulating tape is heated decreases. The tackifier resin is specifically, for example, a terpene tackifier resin, a phenol tackifier resin, a rosin tackifier resin, a petroleum tackifier resin or the like.

The pressure-sensitive adhesive composition may contain, as needed in addition to the crosslinking agents described above, known additives such as aging inhibitors, fillers, colorants (e.g., pigments and dyes), ultraviolet absorbents, antioxidants, chain-transfer agents, plasticizers, softeners, surfactants and antistatic agents, and also solvents (for example, solvents usable during solution polymerization of the acrylic polymer described above).

The pressure-sensitive adhesive layer according to the present invention can be formed by a known or common method of forming a pressure-sensitive adhesive layer, and the preparation method, which may vary for example according to the polymerization method of the acrylic polymer, is not particularly limited, but it can be formed, for example, by the following methods (1) to (3): (1) a method of forming a pressure-sensitive adhesive layer by coating (applying) a pressure-sensitive adhesive composition containing a mixture (monomer mixture) of the monomer components constituting the acrylic polymer or the partial polymer thereof and as needed a photopolymerization initiator and a crosslinking agent on a plastic film base material or a separator and irradiating the layer with active-energy ray (particularly preferably ultraviolet ray); (2) a method of forming a pressure-sensitive adhesive layer by coating (applying) a pressure-sensitive adhesive composition (solution) containing acrylic polymer, solvent, and as needed additives such as crosslinking agents on a plastic film base material or a separator and drying and/or curing the layer; and (3) a method of further drying the pressure-sensitive adhesive layer formed in (1). In particular, the method (2) is preferable from the points of productivity and processability.

The pressure-sensitive adhesive composition can be applied (coated) by a known coating method, and a commonly-used coater, such as gravure roll coater, reverse roll coater, kiss roll coater, dip roll coater, bar coater, knife coater, spray coater, comma coater or direct coater, may be used.

The thickness of the pressure-sensitive adhesive layer according to the present invention is not particularly limited, but preferably 1 to 100 µm, more preferably 5 to 50 µm, and particularly preferably 10 to 30 µm. A thickness of 1 µm or more leads to dispersion of stress, which in turn prevents separation. Alternatively, a thickness of 100 µm or less prevents insufficient drying and also crinkling during winding after application. It also improves processability. It further leads to decrease in the amount of the outgassing released.

The moisture content after storage in an environment at 60°C and 90% RH for 24 hours (referred to as "post-humidification moisture content ") of the pressure-sensitive adhesive layer according to the present invention is less than 0.15 wt %, preferably less than 0.13 wt %, and more preferably 0.12 wt % or less. When the post-humidification moisture content is less than 0.15 wt %, the products containing the insulating tape (electrical devices, etc.) are not under adverse effects, even when the products are used in severer environment (e.g., in higher-temperature and higher-humidity environment or in environment where the temperature and the humidity fluctuate significantly) for an extended period of time.

The post-humidification moisture content of the pressure-sensitive adhesive layer according to the present invention can be controlled, for example, by adjusting the monomer composition of the acrylic polymer.

The post-humidification moisture content of the pressure-sensitive adhesive layer according to the present invention can be determined, for example, by the following method:
A pressure-sensitive adhesive layer according to the present invention is stored in an environment at 60°C and 90% RH for 24 hours; the pressure-sensitive adhesive layer is heated at 150°C; and the moisture content in the gas generated (i.e., the moisture content in the pressure-sensitive adhesive layer after storage in an environment at 60°C and 90% RH 24 hours) is measured. The pressure-sensitive adhesive layer can be heated, for example, by using a heat vaporizer, and the amount of water thereof can be measured, for example, by using a coulometric-titration water analyzer. The ratio (weight fraction) of the water amount thus determined to the weight of the pressure-sensitive adhesive layer after storage in an environment at 60°C and 90% RH for 24 hours is calculated, and used as the post-humidification moisture content of the pressure-sensitive adhesive layer (unit: wt %). More specifically, it can be determined by the "(1) method of determining the post-humidification moisture content " in (evaluation) described below.

Conventional insulating tapes had a problem that products such as electronic devices containing these insulating tapes are less reliable in quality particularly when these products are used in severer environment for an extended period of time. One of the reasons for such deterioration in product reliability would be the water contained in the pressure-sensitive adhesive layer of the insulating tape. Specifically, when water is present in greater amount in the pressure-sensitive adhesive layer of the insulating tape, it is considered that the product reliability (in particular, long-term reliability) declines, because the water therein causes and/or promotes corrosion of the adherend or the material in the peripheral area of the insulating tape, and causes deterioration of the electrically insulating properties of the insulating tape. In contrast, the insulating tape according to the present invention, which has a post-humidification moisture content controlled to a very low level of less than 0.15 wt %, is resistant to the corrosion and the deterioration in electrically insulating properties, even if used in severer environment and makes the products containing the insulating tape according to the present invention show favorable reliability. In addition, the insulating tape according to the present invention, which does not demand any special treatment for reduction of water, can improve the processability in production of the products containing the insulating tape.

The moisture content of the pressure-sensitive adhesive layer according to the present invention (referred to as "initial moisture content ") is not particularly limited, but preferably less than 0.3 wt %, more preferably less than 0.2 wt %, and more preferably less than 0.15 wt %. When the initial moisture content is less than 0.3 wt %, the products containing the insulating tape show favorable reliability, even if the products are used in severer environment (e.g., higher-temperature and higher-humidity environment or environment where the temperature and the humidity fluctuate significantly) for an extended period of time. The initial moisture content of the pressure-sensitive adhesive layer according to the present invention can be determined in a manner similar to that for determination of the post-humidification moisture content, except that the insulating tape is not stored in an environment at 60°C and 90% RH for 24 hours. More specifically, it can be determined by the "(2) method of determining initial moisture content " in the (evaluation) described below.

The initial moisture content of the pressure-sensitive adhesive layer according to the present invention can be controlled, for example, by adjustment of the monomer composition for the acrylic polymer.

### [Other pressure-sensitive adhesive layer]

When the insulating tape according to the present invention has other pressure-sensitive adhesive layer, the kind of the pressure-sensitive adhesive for preparation of the other pressure-sensitive adhesive layer is not particularly limited, and examples thereof include known pressure-sensitive adhesives such as acrylic pressure-sensitive adhesives, rubber-based pressure-sensitive adhesives, vinyl alkylether-based pressure-sensitive adhesives, silicone-based pressure-sensitive adhesives, polyester-based pressure-sensitive adhesives, polyamide-based pressure-sensitive adhesives, urethane-based pressure-sensitive adhesives, fluorine-based pressure-sensitive adhesives, and epoxy-based pressure-sensitive adhesives. The pressure-sensitive adhesives may be used alone or in combination of two or more. The pressure-sensitive adhesive may be a pressure-sensitive adhesive in any type and examples thereof for use include emulsion-type pressure-sensitive adhesives, solvent-type (solution-type) pressure-sensitive adhesives, active-energy ray-curing pressure-sensitive adhesives, heat-fusing pressure-sensitive adhesives (hot melt-type pressure-sensitive adhesives) and the like.

### [Insulating tape according to the present invention]

The insulating tape according to the present invention is preferably a double-sided pressure-sensitive adhesive tape in the configuration having a plastic film base material and a pressure-sensitive adhesive layer according to the present invention formed on both faces thereof (layered structure) or a single-sided pressure-sensitive adhesive tape in the configuration having a plastic film base material and the pressure-sensitive adhesive layer according to the present invention formed on one face thereof. In addition to the plastic film base material, the pressure-sensitive adhesive layer according to the present invention and the other pressure-sensitive adhesive layer, the insulating tape according to the present invention may have other layers (e.g., intermediate layer, undercoat layer, etc.) additionally, if it does not impair the advantageous effects of the invention. In addition, the plastic film base material and the pressure-sensitive adhesive layer may be laminated directly or indirectly for example via another layer such as intermediate layer.

A separator (release liner) may be arranged on the adhesive face of the insulating tape according to the present invention before use. The separator, which is used for protection of the pressure-sensitive adhesive layer, is removed before the pressure-sensitive adhesive layer is bonded to an adherend. The separator may not be formed. The separator for use is not particularly limited and may be a commonly-used release paper, and examples thereof include bases having a release coating layer, less adhesive bases of a fluorine-containing polymer, and less adhesive bases of a nonpolar polymer. Examples of the bases having a release coating layer include plastic films and papers surface-treated with a release coating agent such as silicone-, long-chain alkyl- or fluorine-based release coating agent or molybdenum sulfide. Examples of the fluorine-containing polymers include polytetrafluoroethylene, polychloro-trifluoroethylene, polyvinyl fluoride, polyvinylidene fluoride, tetrafluoroethylene-hexafluoropropylene copolymers, and chlorofluoroethylene-vinylidene fluoride copolymers. Examples of the nonpolar polymers include polyolefinic resins (such as polyethylene and polypropylene). The separator can be formed by a known or commonly-used method. In addition, the thickness of the separator for example is not particularly limited.

The thickness (total thickness) of the insulating tape according to the present invention is not particularly limited, but preferably 5 to 550 µm, more preferably 10 to 200 µm. When the thickness is 5 µm or more, tackiness and electrically insulating properties improve. Alternatively, when the thickness is 550 µm or less, processability of the insulating tape improves. The thickness of the separator is not included in the "thickness of the insulating tape (total thickness)".

The outgassing amount (total outgassing amount: total amount of generated outgases) generated when the insulating tape according to the present invention is heated at 170°C for 15 minutes, as determined by the measurement method described below, is not particularly limited, but preferably 500 ppm or less, more preferably 450 ppm or less, and still more preferably 400 ppm or less. When the outgassing amount is 500 ppm or less, corrosion and malfunction of products containing the insulating tape are suppressed and also local separation, foaming, exfoliation or the like of the insulating tape or materials in the peripheral area thereof are hard to occur, and thus the products show improved reliability. Generally, since the outgassing generated from the insulating tape derives from low-molecular weight components, such as unreacted monomer components and tackifier resins, present in the pressure-sensitive adhesive layer and, in the present invention, for example, the amount of the outgassing generated is reduced, as the tackifier resin is not contained substantially in the pressure-sensitive adhesive layer according to the present invention. The outgassing amount can also be reduced, for example, by proper selection of the polymerization initiator used in polymerization of the acrylic polymer or by control of the molecular weight (weight-average molecular weight) of the acrylic polymer.

When the insulating tape according to the present invention is a single-sided pressure-sensitive adhesive tape, the outgassing amount can be determined, by peeling off the separator and measuring the outgassing amount generated from the pressuze-sensitive adhesive face side is measured. When the insulating tape according to the present invention is a double-sided pressure-sensitive adhesive tape, the outgassing amount can be determined, by peeling off the separator, bonding a PET film as backing material to one of the pressure-sensitive adhesive faces and measuring the amount of outgassing generated from the other pressure-sensitive adhesive face. More specifically, it can be determined by the method in "(4) Total outgassing" in the (evaluation) described below. When the insulating tape according to the present invention is a double-sided pressure-sensitive adhesive tape, the outgassing amount generated preferably satisfies the range, even if any pressure-sensitive adhesive face is used for measurement.

The b* value (chromaticity) of the insulating tape according to the present invention after storage in an environment at 85°C and 85% RH for 550 hours, is not particularly limited, but preferably 0 to 3.0, more preferably 0 to 2.0, and more preferably 0 to 1.5. When the b* value is 3.0 or less, yellowing is suppressed even when the insulating tape is used under severe environment or for an extended period of time, and thus, there is less adverse effect on the appearance of the products, such as electronic devices, containing the insulating tape. When the insulating tape is visible for example from outside of electronic devices, such yellowing of the insulating tape exerts adverse effects on the appearance of the electronic devices and others, providing the users with an impression of deterioration in performance of the products, which is unfavorable. The b* value of the insulating tape after storage in an environment at 85°C and 85% RH for 550 hours can be determined, for example, by peeling off the separator from the insulating tape, bonding it to a slide glass ("Matsunami micro slide glass S1111, manufactured by Matsunami Glass Ind., Ltd., size: 75 mm length × 25 mm width, 1.0 mm thickness), storing the composite in an environment at 85°C and 85% RH for 550 hours, and then measuring the value in accordance with JIS Z8729 by using a simplified spectrocolorimeter (trade name: "DOT-3C", manufactured by Murakami Color Research Laboratory Co., Ltd.).

The test of storing the insulating tape in an environment at 85°C and 85% RH for 550 hours has the significance as an accelerated weathering test (acceleration test). The yellowing behavior of the insulating tape in the test is equivalent, for example, to the yellowing behavior that occurs when it is used in an environment at 25°C for 29 years. According to the Arrhenius Equation, when the temperature difference between the test environment and room temperature is 60°C or more, the acceleration factor becomes 460, and thus, yellowing in 550 hours (23 days) under the test condition is calculated to be 10580 days (29 years) at room temperature, as the period is multiplied by 460. Accordingly, when the b* value of the insulating tape according to the present invention is controlled in the range above, the insulating tape does not yellow, giving less adverse effect on the appearance for example of electronic devices containing the insulating tape, even when they are used under severe environmental condition (for example, under high-temperature and high-humidity condition) or for an extended period of time.

The b* value of the insulating tape according to the present invention after storage in an environment at 85°C and 85% RH for 550 hours can be controlled by proper choice, for example, of the kind and content of the crosslinking agent, the kind and content of the polymerization initiator and the content of the tackifier.

The haze of the insulating tape according to the present invention, is not particularly limited, but preferably 25% or less, more preferably 5% or less. When the haze is 25% or less, the insulating tape has less adverse effect on the appearance of electronic devices and the like containing the insulating tape. The haze can be determined in accordance with JIS K7136, for example, by using a haze meter (trade name: "HM-150", manufactured by Murakami Color Research Laboratory Co., Ltd.).

The dielectric breakdown voltage of the insulating tape according to the present invention is not particularly limited, but preferably 1 kV or more, more preferably 2 kV or more. When the dielectric breakdown voltage is 1 kV or more, the insulating tape shows the functions as an insulating tape sufficiently. The dielectric breakdown voltage can be determined by the method specified in JIS C2107 (2005).

The insulating tape according to the present invention can be produced by a known or common production method. Typical examples of the production methods include a method of forming a pressure-sensitive adhesive layer directly on the surface of a plastic film base material (direct application method) and a method of forming a pressure-sensitive adhesive layer on a separator and then forming a pressure-sensitive adhesive layer on a plastic film base material by transferring (bonding) the pressure-sensitive adhesive layer onto the plastic film base material (transfer method).

The insulating tape according to the present invention can be used generally in applications demanding electrical insulation, and typical embodiments of the use of insulating tape include, but are not particularly limited to, insulation of indoor wirings, conducting wires and electric wire connectors; connection and insulation of the internal wirings in various devices and apparatuses; insulation of outdoor electric wirings, and electric/communication cables and the like.

### EXAMPLES

Hereinafter, the present invention will be described more in detail with reference to Examples, but it should be understood that the present invention is not restricted by these Examples. In the following description and also in Table 1, the blending amounts (addition amounts) of "Coronate L", "Duranate MFA-75X", and "Nikanol H-80" are expressed as the values as solid matter (parts by weight).

### Example 1

100 parts by weight of 2-ethylhexyl acrylate (2EHA) and 4 parts by weight of 2-hydroxyethyl acrylate (HEA) as monomer components, 0.2 part by weight of 2,2'-azobisisobutylonitrile as polymerization initiator, and 250 parts by weight of toluene as polymerization solvent were placed in a separable flask and stirred for 1 hour, as nitrogen gas was introduced. After removal of oxygen in the polymerization system in this way, the mixture was heated to 80°C and allowed to react for 7 hours. Then, toluene was added for adjustment of concentration, to give an acrylic polymer solution having a solid matter concentration of 20 wt % (referred to as "acrylic polymer solution A"). The weight-average molecular weight of the acrylic polymer (referred to as "acrylic polymer A") in the acrylic polymer solution A was 550,000.
As shown in Table 1, 0.5 part by weight of "Coronate L" (trade name, manufactured by NIPPON POLYURETHANE INDUSTRY CO.,LTD., isocyanate crosslinking agent), with respect to 100 parts by weight of the acrylic polymer A, was added as crosslinking agent to and mixed with the acrylic polymer solution A, to give a pressure-sensitive adhesive composition (solution) (referred to as "pressure-sensitive adhesive composition A").
The pressure-sensitive adhesive composition A thus obtained was cast on a polyester film having a thickness of 23 µm (trade name: "LUMIRROR S-10 #25", manufactured by Toray Industries Inc., PET film) to a post-drying thickness of 25 µm and heat-dried under ordinary pressure at 120°C for 3 minutes, to form a pressure-sensitive adhesive layer. A separator was bonded to the surface of the pressure-sensitive adhesive layer. A pressure-sensitive adhesive layer was formed additionally on the face of the PET film opposite to the face where the pressure-sensitive adhesive layer was formed in a similar manner and aged at 50°C for 24 hours, to give an insulating tape (double-sided pressure-sensitive adhesive tape).

### Comparative Example 1

50 parts by weight of n-butyl acrylate (BA), 50 parts by weight of 2-ethylhexyl acrylate (2EHA), 5 parts by weight of methyl methacrylate (MMA) and 4 parts by weight of 2-hydroxyethyl acrylate (HEA) as monomer components, 0.2 part by weight of benzoyl peroxide as polymerization initiator, and 250 parts by weight of toluene as polymerization solvent were placed in a separable flask and stirred for 1 hour, as nitrogen gas was introduced. After removal of oxygen in the polymerization system in this way, the mixture was heated to 80°C and allowed to react for 7 hours. Then, toluene was added for adjustment of concentration, to give an acrylic polymer solution having a solid matter concentration of 20 wt % (referred to as "acrylic polymer solution B"). The weight-average molecular weight of the acrylic polymer (referred to as "acrylic polymer B") in the acrylic polymer solution B was 450,000.
As shown in Table 1, 2.0 parts by weight of "Coronate L" (trade name, manufactured by NIPPON POLYURETHANE INDUSTRY CO.,LTD., isocyanate crosslinking agent), with respect to 100 parts by weight of the acrylic polymer B, was added as crosslinking agent to and mixed with the acrylic polymer solution B, to give a pressure-sensitive adhesive composition (solution) (referred to as "pressure-sensitive adhesive composition B").
The pressure-sensitive adhesive composition B thus obtained was cast on a polyester film having a thickness of 23 µm (trade name: "LUMIRROR S-10 #25", manufactured by Toray Industries Inc., PET film) to a post-drying thickness of 25 µm and heat-dried under ordinary pressure at 120°C for 3 minutes, to form a pressure-sensitive adhesive layer. A separator was bonded to the surface of the pressure-sensitive adhesive layer. A pressure-sensitive adhesive layer was formed additionally on the face of the PET film opposite to the face where the pressure-sensitive adhesive layer was formed in a similar manner and aged at 50°C for 24 hours, to give an insulating tape (double-sided pressure-sensitive adhesive tape).

### Comparative Example 2

59 parts by weight of 2-methoxyethyl acrylate (2MEA), 40 parts by weight of 2-ethylhexyl acrylate (2EHA) and 1 part by weight of 4-hydroxybutyl acrylate (4HBA) as monomer components, 0.2 part by weight of benzoyl peroxide as polymerization initiator, and 250 parts by weight of toluene as polymerization solvent were placed in a separable flask and stirred for 1 hour, as nitrogen gas was introduced. After removal of oxygen in the polymerization system in this way, the mixture was heated to 80°C and allowed to react for 7 hours. Then, toluene was added for adjustment of concentration, to give an acrylic polymer solution having a solid matter concentration of 20 wt % (referred to as "acrylic polymer solution C"). The weight-average molecular weight of the acrylic polymer (referred to as "acrylic polymer C") in the acrylic polymer solution C was 600,000.
As shown in Table 1, 0.4 part by weight of "Duranate MFA-75X" (trade name, manufactured by Asahi Kasei Chemicals Corporation, isocyanate crosslinking agent), with respect to 100 parts by weight of the acrylic polymer C, was added to acrylic polymer solution C as crosslinking agent, to give a pressure-sensitive adhesive composition (solution) (referred to as "pressure-sensitive adhesive composition C").
The pressure-sensitive adhesive composition C thus obtained was cast on a polyester film having a thickness of 23 µm (trade name: "LUMIRROR S-10 #25", manufactured by Toray Industries Inc., PET film) to a post-drying thickness of 25 µm and heat-dried under ordinary pressure at 120°C for 3 minutes, to form a pressure-sensitive adhesive layer. A separator was bonded to the surface of the pressure-sensitive adhesive layer. A pressure-sensitive adhesive layer was formed additionally on the face of the PET film opposite to the face where the pressure-sensitive adhesive layer was formed in a similar manner and aged at 50°C for 24 hours, to give an insulating tape (double-sided pressure-sensitive adhesive tape).

### Comparative Example 3

100 parts by weight of n-butyl acrylate (BA) and 5 parts by weight of acrylic acid (AA) as monomer components, 0.2 part by weight of benzoyl peroxide as polymerization initiator, and 250 parts by weight of toluene as polymerization solvent were placed in a separable flask and stirred for 1 hour, as nitrogen gas was introduced. After removal of oxygen in the polymerization system in this way, the mixture was heated to 80°C and allowed to react for 7 hours. Then, toluene was added for adjustment of concentration, to give an acrylic polymer solution having a solid matter concentration of 20 wt % (referred to as "acrylic polymer solution D"). The weight-average molecular weight of the acrylic polymer (referred to as "acrylic polymer D") in the acrylic polymer solution D was 550,000.

As shown in Table 1, 4.5 parts by weight of "Coronate L" (trade name, manufactured by NIPPON POLYURETHANE INDUSTRY CO.,LTD., isocyanate crosslinking agent) as crosslinking agent and 30 parts by weight of "Nikanol H-80" (trade name, manufactured by MITSUBISHI GAS CHEMICAL COMPANY, INC.) as tackifier, with respect to 100 parts by weight of the acrylic polymer D, were added to and mixed with the acrylic polymer solution D, to give a pressure-sensitive adhesive composition (solution) (referred to as "pressure-sensitive adhesive composition D").

The pressure-sensitive adhesive composition D thus obtained was cast on a polyester film having a thickness of 23 µm (trade name: "LUMIRROR S-10 #25", manufactured by Toray Industries Inc., PET film) to a post-drying thickness of 25 µm and heat-dried under ordinary pressure at 120°C for 3 minutes, to form a pressure-sensitive adhesive layer. A separator was bonded to the surface of the pressure-sensitive adhesive layer. A pressure-sensitive adhesive layer was formed additionally on the face of the PET film opposite to the face where the pressure-sensitive adhesive layer was formed in a similar manner and aged at 50°C for 24 hours, to give an insulating tape (double-sided pressure-sensitive adhesive tape).

### (Evaluation)

The insulating tapes obtained in a Example and Comparative Examples and the pressure-sensitive adhesive layers in the insulating tapes were measured or evaluated by the following measurement or evaluation methods. The evaluation results are summarized in Table 1. The b* value of each of the insulating tapes obtained in the Example and the Comparative Examples after storage in an environment at 85°C and 85% RH for 550 hours was measured by the method described above and the measurement results are shown in Table 1.

### (1) Post-humidification moisture content

The pressure-sensitive adhesive composition (pressure-sensitive adhesive composition A to D) used for preparation of the pressure-sensitive adhesive layer in each of the insulating tapes obtained in the Example and the Comparative Examples was cast on a separator to a post-drying thickness of 25µm, heat-dried under ordinary pressure at 120°C for 3 minutes and aged at 50°C for 24 hours, to form a pressure-sensitive adhesive layer. A separator was bonded additionally to the surfaces on both sides of the pressure-sensitive adhesive layer, to give a sample (in the configuration of "separator/pressure-sensitive adhesive layer/separator"). The pressure-sensitive adhesive layer thus prepared was the same as the insulating tape obtained in the Example and the Comparative Examples.
The sample was cut into pieces of 1 cm width × 3 cm length (area of one face: 3 cm²), one of the separators was peeled off, and an aluminum foil having a weight previously determined was bonded to the pressure-sensitive adhesive face exposed. Then, the other separator was peeled off from the sample carrying the aluminum foil bonded, to give a test sample in the configuration of "pressure-sensitive adhesive layer/aluminum foil".

The test sample was placed in a thermo-hygrostat (trade name: "PLATINOUS (registered trade name) PH-3KT", manufactured by ESPEC Corp.), the internal atmosphere of which is controlled to 60°C and 90% RH, and stored there for 24 hours. After removal from the thermo-hygrostat, the weight of the test sample was determined, and the weight of the pressure-sensitive adhesive layer in the test sample (test sample after storage in an environment at 60°C and 90% RH for 24 hours) was calculated by subtracting the weight of the aluminum foil from the weight of the test sample.

### [Method of measuring moisture content]

The test sample (test sample after storage in an environment at 60°C and 90% RH for 24 hours) was placed in the following heat vaporizer and heated therein at 150°C for 10 minutes, and the gas generated was introduced into the titration cell of the following coulometric-titration water analyzer. The moisture content of the pressure-sensitive adhesive layer in the test sample was determined by measuring the water amount of the gas above (unit: µg) by using the coulometric-titration water analyzer under the measuring condition described below.

The ratio (weight fraction) of the moisture content above in the weight of the pressure-sensitive adhesive layer in the test sample (pressure-sensitive adhesive layer after storage in an environment at 60°C and 90% RH for 24 hours) was calculated and the post-humidification moisture content (unit: wt %) was determined. The measurement was carried out twice (N=2) and the average was calculated, to assure reproducibility of the measurement including sampling. The results are summarized in the column of "Moisture content, After humidification treatment" in Table 1.

### (Analyzer)

Coulometric-titration water analyzer: CA-06, manufactured by MITSUBISHI CHEMICALCOMPANY, INC.

Heat vaporizer: VA-06, manufactured by MITSUBISHI CHEMICALCOMPANY, INC.

### (Measuring condition)

Method: heat vaporization method/heated to 150°C
Positive electrode solution: Aquamicron AX
Negative electrode solution: Aquamicron CXU

### (2) Initial moisture content

The pressure-sensitive adhesive composition (pressure-sensitive adhesive composition A to D) used for preparation of the pressure-sensitive adhesive layer in each of the insulating tapes obtained in the Example and the Comparative Examples was cast on a separator to a post-drying thickness of 25µm, heat-dried under ordinary pressure at 120°C for 3 minutes and aged at 50°C for 24 hours, to form a pressure-sensitive adhesive layer. A separator was bonded additionally to the surfaces on both sides of the pressure-sensitive adhesive layer, to give a sample (in the configuration of "separator/pressure-sensitive adhesive layer/separator"). The pressure-sensitive adhesive layer thus prepared was the same as the insulating tape obtained in the Example and the Comparative Examples.

The sample was cut into pieces of 1 cm width × 3 cm length (area of one face: 3 cm²), one of the separators was peeled off, and an aluminum foil having a weight previously determined was bonded to the pressure-sensitive adhesive face exposed. Then, the other separator was peeled off from the sample carrying the aluminum foil bonded, to give a test sample in the configuration of "pressure-sensitive adhesive layer/aluminum foil".

The test sample was moisture-conditioned, as it is left in an environment at 23°C and 50% RH for 24 hours, the weight of the test sample was determined, and the weight of the pressure-sensitive adhesive layer in the test sample was calculated by subtracting the weight of the aluminum foil. Then, the initial moisture content (unit: wt %) of the pressure-sensitive adhesive layer in the test sample was determined in a manner similar to the method described in (1) [method of measuring moisture content]. The measurement was carried out twice (N=2) and the average was calculated, to assure reproducibility of the measurement including sampling. The results are summarized in the column of "Moisture content, Initial" in Table 1.

### (3) Electrically insulating properties

Each of the insulating tapes obtained in the Example and the (Comparative Examples was cut into pieces of 50 mm width × 50 mm length, and the separator was peeled off, to give a test sample. The test sample was held between two balls having an own weight of 500 g and a diameter of 12.5 mmΦ and the voltage, at which the test sample permits electrical transmission when the voltage was raised at a velocity of 1.0 kV/second (dielectric breakdown voltage), was determined (in accordance with JIS C2107) by using a dielectric strength testing device (manufactured by Tokyo Transformer Co., Ltd.).

The results are shown in the column of "Dielectric breakdown voltage" in Table 1.

### (4) Total outgassing (outgassing amount)

A PET film (trade name: "LUMIRROR S-10", manufactured by Toray Industries Inc., thickness: 25 µm) was bonded to the pressure-sensitive adhesive face (one of the adhesive faces) of each of the insulating tapes obtained in the Example and the Comparative Examples. Then, the film was cut into pieces of 1 cm width × 7 cm length, and the separator was peeled off, to give a test sample.

The test sample was heated at 170°C for 15 minutes in a purge & trap headspace sampler, the gas generated (outgassing) was trapped, and the trapped components were analyzed by using a gas chromatograph/mass spectrometer. The amount of the gas generated (outgassing amount) was determined as a converted value as toluene (unit: ppm).

The results are shown in the column of "Total outgassing" in Table 1.

### (5) 180° peel adhesion

Each of the insulating tapes obtained in the Example and the Comparative Examples was cut into strips of 20 mm width × 150 mm length, to give a test sample. The 180° peel test was performed in accordance with JIS Z0237 (2000) by using a tensile tester, to give a 180° peel strength (unit: N/20 mm) to a test plate (SUS304BA steel plate), which was used as "180° peel adhesion".

The test plate and the test sample were bonded to each other, as a PET film (trade name: "LUMIRROR S-10", manufactured by Toray Industries Inc., thickness: 25 µm) was bonded to one of the adhesive faces of the insulating tape (for backing), the separator was peeled off, the other adhesive face exposed is placed on the test plate, and the composite was pressed by one reciprocation of a 2 kg rubber roller (width: approximately 45 mm).

The measurement was performed in an environment at 23°C and 50% RH under the condition of peeling angle of 180 and a tensile speed of 300 mm/minute. The test was carried out three times (N=3) and the average was calculated. The results are shown in the column of "180° Peel adhesion" in Table 1.

### (6) Release force of separator

Each of the insulating tapes obtained in the Example and the Comparative Examples was cut into strips of 50 mm width × 150 mm length; and a PET film (trade name: "LUMIRROR S-10", manufactured by Toray Industries Inc., thickness: 25 µm) was bonded (as backing) to the adhesive face on the side where there is no separator formed, to give a test sample.

The 180° peel test was performed in accordance with JIS Z0237 (2000) by using a tensile tester, and 180° peel strength (peeling strength) (unit: N/50 mm) of the separator was determined and used as the "Release force of separator".

The measurement was performed in an environment at 23°C and 50% RH under the condition of a peeling angle of 180° and a tensile speed of 300 mm/minute. The test was carried out three times (N=3) and the average was calculated. The results are shown in the column of "Release force of separator" in Table 1.

### (7) Holding power

Each of the insulating tapes obtained in the Example and the Comparative Examples was cut into strips (size: width 10 mm × length 100 mm), and a PET film (trade name: "LUMIRROR S-10", manufactured by Toray Industries Inc., thickness: 25 µm) was bonded (as backing) to the adhesive face on the side where there is no separator formed, to give a tape piece.

Then, the separator was peeled off from the tape piece, and the adhesive face (measuring face) was bonded to a Bakelite plate (size: 25 mm width × 125 mm length, 2 mm thickness) at a bonding area of 200 mm² (size: 10 mm width × 20 mm length). Then, the laminate was pressed by one reciprocation of a 2 kg roller and aged in an environment at 40°C and 50% RH for 0.5 hour, to give a test sample.

The holding power of the insulating tape was determined by using the test sample (in accordance with JIS Z0237). The holding power was determined by measuring, by using a holding power tester, the distance (distance of displacement) (mm/hour) of the insulating tape moved from the original bonding position, as it is fixed to the Bakelite plate, in an environment at 40°C and 50% RH, when a tensile load of 500 gf was applied to one terminal of the insulating tape (in the length direction) for 1 hour. The results are shown in the column of "Holding power" in Table 1.

### (8) Less-corrosive property (reliability)

A PET film (trade name: "LUMIRROR S-10 #25", manufactured by Toray Industries Inc., thickness: 25 µm) was bonded to the pressure-sensitive adhesive face (one of the adhesive faces) of each of the insulating tapes obtained in the Example and the Comparative Examples, and the laminate was cut into pieces with a size of 20 mm width × 50 mm length, to give a test piece.

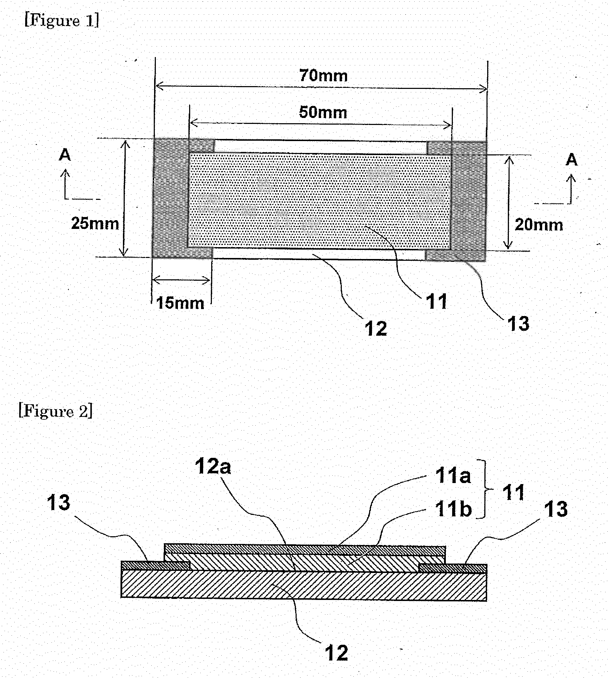

As shown in Figures 1 and 2, a silver paste 13 was coated to a width of 15 mm on both terminals of the ITO film-formed face 12a of a conductive PET film 12 (trade name: "ELECRYSTA V-270TFMP", manufactured by Nitto Denko Corporation) (size: 70 mm length × 25 mm width). The adhesive face of the test piece 11 with its separator peeled off was bonded to the ITO film-formed face 12a, to give a laminated film (laminate film of test piece 11 and conductive PET film 12) (sample for resistance test). The laminate film was left in an environment at 23°C for 24 hours and the resistance thereof was determined and used as "resistance immediately after bonding". Subsequently, the laminated film was left in an environment at 85°C and 85% RH for 168 hours, and the resistance was determined and used as "resistance after heat/humidification treatment".

The resistance was determined by using a "3540-mΩ HiTESTER," manufactured by HIOKI E.E. CORPORATION), as the electrodes are connected to the surface of the silver pastes 13 at both terminals of the laminated film.

The resistance change rate was calculated in accordance with the following Formula, by using the "resistance immediately after bonding" and the "resistance after heat/humidification treatment" measured.

"Resistance change rate" (%) = 100 × ("Resistance after heat/humidification treatment" "Resistance immediately after bonding")/"Resistance immediately after bonding"

The insulating tape was evaluated to be A (small increase in resistance, favorable less-corrosive property (reliability)) when the resistance change rate is less than 110%) and it was evaluated to be B (large increase in resistance, unfavorable less-corrosive property (reliability)) when the resistance change rate is 110% or more.

The results are shown in the column of "Less-coriosive property (reliability)" in Table 1.

[Table 1]

**(Table 1)**

| | | | | Example 1 | Comparative Example1 | Comparative Example2 | Comparative Example3 |
|---|---|---|---|---|---|---|---|
| Pressure-sensitive adhesive layer | Pressure-sensitive adhesive composition | Acrylic polymer | Monomer composition | Acrylic polymer A 2EHA/HEA =100/4 | Acrylic polymer B BA/2EHA/MMA/HEA =50/50/5/4 | Acrylic polymer C 2MEA/2EHA/4HBA =59/40/1 | Acrylic polymer D BA/AA =100/5 |
| | | | Content (parts by weight) | 100 | 100 | 100 | 100 |
| | | Crosslinking agent | Kind | Coronate L | Coronate L | Duranate MFA-75X | Coronate L |
| | | | Content (parts by weight) | 0.5 | 2.0 | 0.4 | 4.5 |
| | | Tackifier | Kind | - | - | - | Nikanol H-80 |
| | | | Content (parts by weight) | - | - | - | 30 |
| | Moisture content | Initial (wt %) | | 0.11 | 0.20 | 0.34 | 0.53 |
| | | After humidification treatment (wt %) | | 0.12 | 0.25 | 0.42 | 0.57 |
| Insulating tape | b* value (after storage at 85°C and 85% RH for 550 hours) | | | 1.1 | 2.1 | 0.9 | 6.2 |
| | Dielectric breakdown voltage (kV) | | | 7.3 | 7.4 | 1.5 | 7.0 |
| | Total outgassing (ppm) | | | 210 | 200 | 250 | 2200 |
| | 180° Peel adhesion (N/20mm) | | | 2.0 | 5.1 | 4.9 | 8.0 |
| | Holding power (mm/hour) | | | 0.2 | 0.2 | 0.1 | 0.1 |
| | Release force of Separator (N/50mm) | | | 0.09 | 0.12 | 0.08 | 0.08 |
| | Less Corrosive property (reliability) | | | A | B | B | B |

As obvious from the results in Table 1, the insulating tape according to the present invention (Example) shows superior less-corrosive property, even when left in an environment at 60°C and 90% RH for an extended period of time, making products containing the insulating tape according to the present invention show favorable reliability. In contrast, the insulating tape (Comparative Example 3) containing a carboxyl group-containing monomer as the monomer component constituting the acrylic polymer of pressure-sensitive adhesive layer and having a pressure-sensitive adhesive layer that had an excessively high moisture content after storage in high-humidity and high-temperature environment was unfavorable in less-corrosive property. Even when the insulating tape contained no carboxyl group-containing monomer as the monomer component, if the pressure-sensitive adhesive layer had an excessively high moisture content after storage in high-humidity and high-temperature environment (Comparative Examples 1 and 2), the less-corrosive property was unfavorable.

Abbreviations in Table 1 are as follows:
2EHA: 2-ethylhexyl acrylate
HEA: 2-hydroxyethyl acrylate
13A: n-butyl acrylate
MMA: methyl methacrylate
2MEA: 2-methoxyethyl acrylate
4HBA: 4-hydroxybutyl acrylate
AA: acrylic acid
Coronate L: an aromatic isocyanate crosslinking agent, manufactured by NIPPON POLYURETHANE INDUSTRY CO.,LTD.
Duranate MFA-75X: an aliphatic isocyanate crosslinking agent (hexamethylene diisocyanate crosslinking agent), manufactured by Asahi Kasei Chemicals Corporation.
Nikanol H-80: a tackifier, manufactured by MITSUBISHI GAS CHEMICAL COMPANY, INC.

### [Reference Signs List]

- 11: Test piece
11a PET film
11b Insulating tape
- 12: Conductive PET film 12a ITO film-formed face
- 13: Silver paste

## Claims

1. An insulating tape comprising a plastic film base material and a pressure-sensitive adhesive layer including an acrylic polymer on or above at least one face of the plastic film base material, wherein the pressure-sensitive adhesive layer has a moisture content, as determined after storage in an environment at 60°C and 90% RH for 24 hours, of less than 0.15 wt % and monomer components constituting the acrylic polymer contain substantially no carboxyl group-containing monomer.

2. The insulating tape according to Claim 1, wherein the acrylic polymer includes, as monomer components, an alkyl (meth)acrylate in an amount of 70 to 99 wt % and a hydroxyl group-containing monomer in an amount of 1 to 10 wt % with respect to the total amount of the monomer components constituting the acrylic polymer (100 wt %).

3. The insulating tape according to Claim 1 or 2, wherein a b* value after storage in an environment at 85°C and 85% RH for 550 hours is 0 to 3.0.
